# EUROPÄISCHE PATENTSCHRIFT

(11) **EP 0 526 893 B1**
(45) Veröffentlichungstag und Bekanntmachung des Hinweises auf die Patenterteilung: **19.06.1996**
(21) Anmeldenummer: 92113395.5
(22) Anmeldetag: 06.08.1992
(51) Int. Cl.: B60P 3/077

(54) **Radvorleger für Autotransportfahrzeuge**
Wheel chock for automobile transporting vehicles
Dispositif de calage pour véhicules transportant des automobiles

(30) Priorität: 06.08.1991 DE 4126005
(43) Veröffentlichungstag der Anmeldung: 10.02.1993
(73) Patentinhaber: GRAAFF Gesellschaft mit beschränkter Haftung, D-31008 Elze (DE)
(72) Erfinder: Graaff, Wolfgang, W-3200 Hildesheim (DE); Seidenstücker, Bernhard, W-3250 Hameln (DE); Eckbrett, Horst, W-3210 Elze (DE)
(74) Vertreter: Walter, Helmut, Dipl.-Ing.

(56) Entgegenhaltungen:
- EP-A- 0 437 413
- DE-C- 3 113 707
- DE-U- 7 810 867

## Beschreibung

Aus der DE-PS 31 13 707 ist ein Radvorleger zu entnehmen, der den damals bekannten gewesenen Stand der Technik im Hinblick auf Wirtschaftlichkeit Verbessert. Der Radvorleger hat zur Lösung dieser Aufgabe die Form eines liegenden Dreiecks, das gleichschenklig und spitzwinklig ist und zwei zur Radabstützung vorgesehene Stützstreben aufweist.

Die Form eines geschlossenen, liegenden Dreiecks hat auch ein Radvorleger, der aus der DE-U-78 10 867 bekannt geworden ist, entsprechend den Merkmalen des Oberbegriffs von Anspruch 1. Eine Stützstrebe und eine Führungsstrebe schließen einen rechten Winkel ein, sind in der Spitze dieses Winkels miteinander verbunden und ihre dem Scheitel des Winkels abgekehrten Enden sind durch eine diagonale Verbindungsstrebe miteinander verbunden. Offensichtlich ist die Verbindungsstrebe eine für die Winkelsteifigkeit notwendige direkte Strebe, ohne die der Radvorleger nicht bestimmungsgemäß funktionieren könnte. Dies scheint auch aus dem Grunde als notwendig erachtet worden zu sein, weil der Radvorleger in seiner Gesamtheit um ein Gelenk schwenkbar ist, die an der Spitze des rechten Winkels angeordnet ist, eine vertikale Gelenkachse hat und von Verspannungskräften freigehalten werden muß, um nicht unbrauchbar zu werden. In einem solchen Fall die Steifigkeit des Radvorlegers durch eine Verbindungsstrebe zu gewährleisten, erscheint offensichtlich dem auf diesem Gebiet tätigenden Fachmann als die sich am ehesten anbietende Lösung, obwohl hiermit ein Radvorleger geschaffen ist, der relativ hohen Bauaufwand erfordert, vor allem aber auch auf einer Ladefläche relativ viel Platz erfordert, der nicht andersweitig nutzbar ist. Auch dieser Radvorleger ist kein wirtschaftliches Optimum.

Der vorliegenden Erfindung liegt die Erkenntnis zugrunde, daß mit diesen bekannten Radvorlegern das wirtschaftlich tatsächlich Erreichbare noch nicht erreicht ist, obwohl dies bei der an erster Stelle genannten Lösung ausdrücklich als die zu lösende Aufgabe genannt ist. Der vorliegenden Erfindung liegt demzufolge die gleiche Aufgabe wie dem als bekannt vorausgesetzten Radvorleger zugrunde, indem er sich durch eine größere Wirtschaftlichkeit auszeichnet, sie geht jedoch von einem Stand der Technik aus, der bereits größere Wirtschaftlichkeit ermöglicht als der damals bekannte Stand der Technik.

Die erfindungsgemäße Lösung der Aufgabe ergibt sich aus dem Kennzeichen des unabhängigen Patentanspruches.

Bevorzugte Ausführungsformen sind in den abhängigen Ansprüchen dargestellt.

Danach besteht die Erfindung in einem baulich besonders einfachen Radvorleger, dieser Radvorleger ist aber darüberhinaus Teil eines Systems, das die Ausbildung der Ladefläche eines Autotransportfahrzeuges umfaßt, wobei das Autotransport` fahrzeug zwar sowohl ein Schienen- als auch ein Straßenfahrzeug sein kann, angesichts der Problematik und ihrer Lösung jedoch in erster Linie an ein Schienenfahrzeug gedacht ist, weil die Erfindung dann sich besonders wirtschaftlich darstellen läßt, wenn das Autotransportfahrzeug so dimensioniert ist, daß eine relativ große Anzahl von Personen- oder Lastkraftwagen, also "Autos" hintereinanderstehend mittels des Autotransportfahrzeuges transportierbar sind.

Die Erfindung ist nachfolgend anhand der Zeichnung näher beschrieben; in der Zeichnung zeigen:
- Fig. 1: einen Querschnitt durch eine erfindungsgemäß ausgebildete Ladefläche bzw. eine Ladefläche, die so vorbereitet ist, daß ihr eine Mehrzahl von erfindungsgemäßen Radvorlegern zugeordnet werden können,
- Fig. 2: den Ausschnitt A aus Fig. 1 in größerer Darstellung,
- Fig. 3: den Ausschnitt B aus Fig. 1 in entsprechend größerer Darstellung,
- Fig. 4: ein einzelner erfindungsgemäßer Radvorleger in der Draufsicht und zwar in zwei verschiedenen Endstellungen, wobei die in ausgezogenen Linien dargestellte Endstellung die Wirkstellung und die in unterbrochenen Linien dargestellte Endstellung die Außerbetriebsstellung ist,
- Fig. 5: ein Radvorleger gemäß Fig. 4 in der Längsrichtung der im wesentlichen rechteckigen Ladefläche gesehen und in der Zuordnung zur Ladefläche und
- Fig. 6: in einer Fig. 4 entsprechenden Darstellung eine Weiterbildung des erfindungsgemäßen Radvorlegers.

Die Ladefläche 1 ist in einer an sich üblichen Bauweise gefertigt, sie ist eine leicht nach oben gewölbte, in der Draufsicht rechteckige Platte, wobei die längeren Seiten die Fahrtrichtung markieren. Die Platte fällt von der Scheitellinie 2, die die Mittellängslinie ist, gleichmäßig nach beiden Längsseiten hin ab. An jeder Längsseite schließt die Platte 1 mit einem im Querschnitt Z-förmigen Randprofil 3 bzw. 4 ab und jedes Randprofil ist an der Ober- und Unterseite durch ein im Querschnitt rechteckigen Verstärkungsprofil 5 bzw. 6 verstärkt. Symmetrisch zur Mittellängs- bzw. Scheitellinie 2 sind zu ihren beiden Seiten, voneinander angemessen beabstandet je eine Radvorlegerschiene 7 und eine Anschlagschiene 8 auf der Platte 1 befestigt. Radvorlegerschiene 7 und Anschlagschiene 8 jedes Schienenpaares haben etwa gleiche Länge, ihre Länge entspricht etwa der Länge der Ladefläche bzw. Platte 1 und sie verlaufen parallel zueinander und parallel zu den Längsrändern der Platte und ihrer Längsmittellinie 2 in der Draufsicht auf die Platte 1. Jede Radvorlegerschiene hat einen vertikalen Steg, dessen unteres Ende, das mit der Platte 1 fest zu verbinden ist, in mehrere aufeinanderfolgende Abschnitte 7a und 7b unterteilt ist, die zur Erhöhung der Versteifung der Schiene selbst und ihrer Verbindung mit der Platte gegeneinander zu den Seiten hin abgespreizt sind. Am oberen Ende läuft der Steg in einem Schienenkopf 7c aus, der im Querschnitt kreisabschnittsförmig ist. Die gesamte Konstruktion besteht vorzugsweise aus Metall; und Radvorlegerschiene und Platte sind miteinander verschweißt, wobei Beilagen 9 den Winkel zwischen der unteren Stegstirnseite und der Platte 1 ausgleichen.

Die Anschlagschiene 8 ist ein Kaltwalzprofil, dessen Grundform ein L mit etwa gleichen Schenkellängen ist, dessen einer, horizontaler Schenkel mit der Platte 1 verbunden ist und dessen anderer Schenkel am oberen, freien Ende einen nach innen gerichteten Bogen bildet. Entsprechend ausgerundet ist auch der Scheitel des "L". Die Verbindung zwischen Anschlagschienen und Platte 1 erfolgt mit auf die Schienenlängen im wesentlichen gleichmäßig verteilten Scherzugnieten 10.

Ein auf der Platte 1 abgestelltes Straßenfahrzeug ist durch eines seiner Radpaare 11 symbolisiert, und es ist zu ersehen, daß das Straßenfahrzeug mit den Rädern jeder Seite zwischen einer der Radvorlegerschiene 7 und der zugehörigen Anschlagschiene 8 steht.

Jeder Radvorleger selbst ist nun ein einfacher Winkel, dessen beiden Schenkel 12,13 in sich biegesteif sind und im Scheitel biegesteif miteinander verbunden sind. Beide Schenkel bzw. Streben schließen zwischen sich einen Winkel von 90° ein.

Eine Verlängerung des Schenkels 13 über den Scheitel des "L" hinaus ist als Lagerauge 14 ausgebildet, mit dem der Radvorleger 12 bis 14 drehbar auf einem vertikalen Zapfen 15 gelagert ist. Der Lagerzapfen 15 sitzt in einer aus dem vorausgesetzten Stand der Technik bekannten Weise auf einem Sattelstück 16, das in ebenfalls vom Stand der Technik her bekannter Weise auf der Radvorlegerschiene verschiebbar ist und in verschiedenen Bereichen der Radvorlegerschiene gegenüber festgelegt werden kann. Die Mittel hierzu sind vorzugsweise die des Standes der Technik, so daß hierauf im einzelnen nicht eingegangen werden muß.

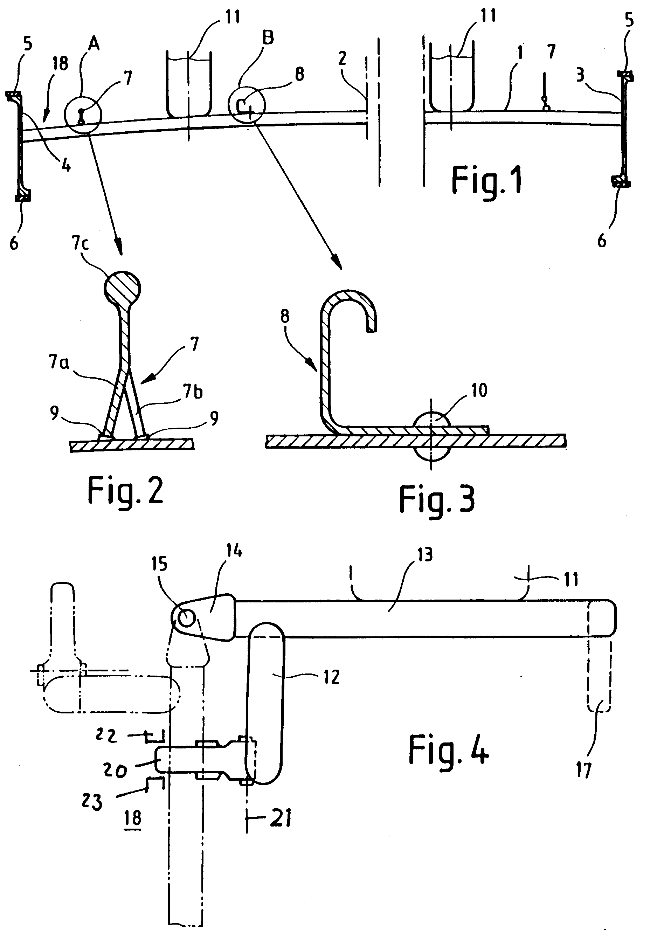

In entsprechend bekannter Weise kann die Schwenkmöglichkeit des Radvorlegers gegenüber den Lagerzapfen 15 freigegeben oder blockiert werden. Ist die Schwenkmöglichkeit freigegeben, so kann der Radvorleger zwischen den beiden Endstellungen geschwenkt werden, die in Fig. 4 durch ausgezogene bzw. unterbrochene Linien gekennzeichnet sind. Mit unterbrochenen Linien ist der Radvorleger in die Position geschwenkt dargestellt, wie es die entsprechenden anderen Radvorleger ebenfalls sein können, in der Fahrzeuge, also "Autos", auf das Autotransportfahrzeug mit eigener Motorkraft oder Fremdkraft hinausgefahren werden können oder vom Autotransportfahrzeug heruntergefahren werden können. Hat das jeweilige Auto seine Transportposition erreicht, so wird der jeweilige Radvorleger in seine durch ausgezogene Linien dargestellte Betriebsposition geschwenkt und in dieser festgelegt. Die Stützstrebe 13 weist in Querrichtung der Platte 1 und liegt vor bzw. hinter einem der Räder des jeweiligen Autos. Das Auto ist durch zumindest ein Radvorlegerpaar gegen Längsbewegungen relativ zum Autotransportfahrzeug festgelegt. Querbewegungen können in den Grenzen zulässig sein, die der seitliche Abstand zwischen Autorädern und Anschlagschiene 8 zuläßt. Um zu gewährleisten, daß bei jedem zulässigen Abstand zwischen den Autorädern und den Anschlagschienen die Längsfestlegung erhalten bleibt, müssen die Abstände zwischen Radvorlegerschienen und Anschlagschienen einerseits und die Länge der Abstützstreben andererseits aufeinander abgestimmt sein.

Diese Abstimmung ist nicht notwendig, wenn statt eines Anschlagschienenpaares der Abstützstrebe jedes Radvorlegers ein eigener Endanschlag 17 zugeordnet ist, die Anschlagschienen also gleichsam in einzelne, relativ kurze Abschnitte unterteilt sind und jeweils einer dieser Abschnitte einem Radvorleger fest zugeordnet ist.

Die Länge der Lagerstrebe jedes Radvorlegers ergibt sich aus der Breite eines Wartungsganges 18, der entlang jedem Längsrand der Platte 1 verläuft. Die Länge der Lagerstrebe 12 entspricht etwa der Breite des jeweiligen Wartungsganges und soll nicht breiter als dieser sein.

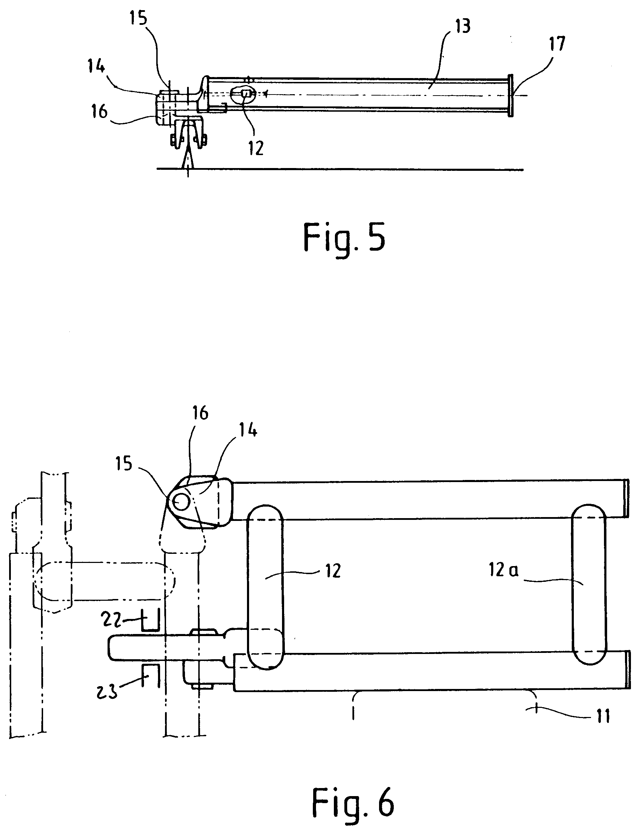

Nach Fig. 6 können zwei erfindungsgemäße Radvorleger zu einer Einheit zusammengeschlossen sein, womit sich ein beidseitig benutzbarer Radvorleger ergibt. Dabei sind die beiden Stützstreben mit ihren lagerseitigen Enden über die Lagerstrebe hinaus verlängert und der Knotenpunkt zwischen Lagerstrebe und einer Stützstrebe ist in der vorbeschriebenen Weise als Lagerung ausgebildet, während der Knotenpunkt zwischen der anderen Stützstrebe und der Lagerstrebe zur Arretierung gegenüber der Radvorlegerschiene ausgebildet ist. Die zur Lagerstrebe 12 parallele Strebe 12a hat dabei allein versteifende Funktion.

Eine Möglichkeit für die Arretierung ist die Zuordnung eines Hebels 20 zu dem Radvorleger, wobei der Hebel 20 um eine Achse 21 schwenkbar dem Radvorleger zugeordnet ist und in jeder der beiden Endstellungen des Radvorlegers zwischen den in sich federnden Klemmbacken 22,23 jeweils eines Klemmbackenpaares gehalten ist und zum Schwenken des Radvorlegers aus dem Einflußbereich der Klemmbacken herauszubringen ist. Der Hebel ist am freien Ende der Lagerstrebe 12 (Fig.4,5) oder im Bereich zwischen Lagerstrebe und Stützstrebe angeordnet, der nicht der Bereich des Lagerzapfens 15 bzw. Lagerauges 14 ist (Fig.6).

## Patentansprüche

1. Radvorlegereinrichtung für den Einsatz bei Autotransportfahrzeugen, die aufweist
1.1. eine Lagerstrebe (12), die im eingebauten und Betriebszustand des Radvorlegers horizontal in Längsrichtung des Fahrzeuges verläuft und in dieser Richtung gegenüber einer Radvorlegerschiene (7) verstellbar und am Ende einer Verstellbewegung gegenüber der Radvorlegerschiene (7) festlegbar ist und
1.2. eine Stützstrebe (2), die mit der Lagerstrebe (12) fest verbunden ist, mit der Lagerstrebe (12) einen Winkel von 90° einschließt, im eingebauten und Betriebszustand des Radvorlegers ebenfalls horizontal verläuft, aber zur Längsmitte der Ladefläche (1) des Autotransportfahrzeuges gerichtet ist, wobei
1.3. die Radvorlegerschiene (7) neben einem Wartungsgang (18) nahe der einen Längsseite der Ladefläche (1) des Autotransportfahrzeuges dieser Ladefläche zugeordnet ist,
**dadurch gekennzeichnet, daß**
1.4. die Stützstrebe (13) und die Lagerstrebe (12) in sich biegesteif sind,
1.5. die Verbindung zwischen Lagerstrebe (12) und Stützstrebe (13) winkelsteif ist,
1.6. Lagerstrebe (12) und Stützstrebe (13) unter dem Winkel von 90° allein im Winkelscheitel miteinander verbunden sind und
1.7. die Zuordnung des Radvorlegers mit Stützstrebe (13) und Lagerstrebe (12) zur Radvorlegerschiene (7) einmal in einem Gelenk (14,15) mit vertikaler Schwenkachse am Ende der Stützstrebe (13) erfolgt, das von der Längsmitte (2) der Ladefläche (1) aus jenseits der Lagerstrebe (12) liegt und zum anderen Mal im Bereich der Stützstrebe abgekehrten Ende der Lagerstrebe (12) in einer Einrichtung mit einem Hebel (20), der um eine horizontale Achse (21) gegenüber dem Lagerhebel (12) vertikal schwenkbar ist, um in seiner einen Endstellung, zwischen zwei federnden Klemmbacken (22,23) gehalten, der Radvorlegerschiene (7) zugeordnet zu sein und in seiner anderen Endstellung so weit angehoben zu sein, daß er mit Lagerstrebe (12) und Stützstrebe (13) um die vorgenannte vertikale Schwenkachse über die Radvorliegerschiene (7) verstellt werden zu können.

2. Radvorlegereinrichtung nach Anspruch 1, **dadurch gekennzeichnet,** daß im Bereich des freien Endes der Stützstrebe (13) ein Querbewegungen eines am Radvorleger abgestützten Autorades (11) begrenzender Endanschlag (8; 17) zugeordnet ist.

3. Radvorlegereinrichtung nach Anspruch 2, **dadurch gekennzeichnet,** daß der Anschlag ein mit dem freien Ende der Stützstrebe (13) unmittelbar fest verbunder Endanschlag (17) ist.

4. Radvorlegereinrichtung nach Anspruch 2, **dadurch gekennzeichnet,** daß der Anschlag Teil einer Anschlagschiene (8) ist. die zwischen dem freien Ende der Lagerstrebe (13) und der Längsmittellinie (2) der Ladefläche (1) des Autotransportfahrzeugs auf der ganzen Länge der Radvorlegerschiene (7) parallel zur Radvorlegerschiene (7) und der vorgenannten Längsmittellinie (2) verlaufend, der Ladefläche (1) fest zugeordnet ist.

5. Radvorlegereinrichtung nach einem der Ansprüche 1 bis 4, **dadurch gekennzeichnet,** daß die Einheit aus Lagerstrebe (12) und Stützstrebe (13) um eine vertikale Achse (15) schwenkbar einem Sattelstück (16) zugeordnet ist, das seinerseits längsverschieblich und festlegbar der Radvorlegerschiene (7) zugeordnet ist, wobei die Einheit in zwei verschiedenen Endstellungen festlegbar ist, in deren einer die Stützstrebe (13) in der Querrichtung, in deren anderer die Stützstrebe (13) in der Längsrichtung der rechteckigen Ladefläche (1) des Autotransportfahrzeugs verläuft.

6. Radvorlegereinrichtung nach Anspruch 5, **dadurch gekennzeichnet,** daß die Länge der Lagerstrebe (12) zwischen Schwenkachse (15) und freiem Ende etwa der Breite des Wartungsganges (18) entspricht, die Breite des Wartungsganges jedoch nicht überschreitet.

## Claims

1. A wheel-blocking device for use in car transporters and comprising:
1.1 a bearing strut (12) which, when the wheel blocking device is installed and in the operating condition, extends horizontally in the longitudinal direction of the vehicle and is adjustable in this direction relatively to a wheel-blocking rail (7) and can be fixed relatively thereto at the end of an adjusting movement and
1.2 a support strut (2) which is firmly connected to the bearing strut (12), includes an angle of 90° therewith, and likewise extends horizontally when the wheel-blocking device is installed and in the operating state, but points towards the longitudinal centre of the loading surface (1) of the car transporter, and
1.3 the wheel-blocking rail (7) is associated with the loading surface (1) of the car transporter near a service gangway (18) near one longitudinal side of the loading surface,
characterised in that
1.4 the support strut (13) and the bearing strut (12) are intrinsically resistant to bending,
1.5 the connection between the bearing strut (12) and the support strut (13) is at a fixed angle,
1.6 the bearing strut (12) and the support strut (13) at the angle of 90° are connected to one another at the apex only and
1.7 the wheel-blocking device comprising the support strut (13) and the bearing strut (12) are associated with the rail (7) on the one hand at a joint (14, 15) having a vertical swivel axis at the end of the support strut (13) and extending from the longitudinal centre (2) of the loading surface (1) beyond the bearing strut (12) and, on the other hand, in the neighbourhood of the end of the bearing strut (12) remote from the support strut, at a device comprising a lever (20) which is vertically pivotable around a horizontal axis (21) relatively to the bearing lever (12) in order in one end position, hold between two resilient clamping jaws (22, 23), to be associated with the rail (7), and in the other end position to be raised sufficiently for it together with the bearing strut (12) and support strut (13) to be adjustable around the said vertical swivel axis over the rail (7).

2. A device according to claim 1, characterised in that an end stop (18, 17) limiting transverse motion of a motor vehicle (11) abutting the wheel-blocking device is disposed in the neighbourhood of the free end of the support strut (13).

3. A device according to claim 2, characterised in that the stop is an end stop (17) directly and firmly connected to the free end of the support strut (13).

4. A device according to claim 2, characterised in that the stop is part of a stop rail (8) which is permanently associated with the loading surface (1) and extends between the free end of the bearing strut (13 and the longitudinal central line (2) of the loading surface (1) of the car transporter along the entire length of the rail (7) and parallel to the rail (7) and the said longitudinal central line (2).

5. A device according to any of claims 1 to 4, characterised in that the unit comprising the bearing strut (12) and the support strut (13) is pivotable around a vertical axis (15) and associated with a saddle member (16) which is longitudinally movable and adapted to be fixed to and associated with the rail (7), the unit being fixable in two different end positions, in one of which the support strut (13) extends in the transverse direction whereas in the other position the support strut (13) extends in the longitudinal direction of the rectangular loading surface (1) of the car transporter.

6. A device according to claim 5, characterised in that the length of the bearing strut (12) between the swivel axis (15) and the free end is approximately equal to but does not exceed the width of the service gangway (18).

## Revendications

1. Dispositif de calage de roues destiné à être utilisé dans des véhicules de transport de voitures, qui comporte
1.1. un étançon de support (12) qui, à l'état monté et opérationnel du dispositif de calage de roues, s'étend horizontalement en direction longitudinale du véhicule, qui peut être déplacé dans cette direction par rapport à un rail de calage (7) de roues et qui, à la fin du mouvement de déplacement, peut être bloqué par rapport au rail de calage (7) de roues, et
1.2. un étançon d'appui (2) qui est solidairement relié à l'étançon de support (12), qui forme un angle de 90° avec l'étançon de support (12), et qui, à l'état monté et opérationnel du dispositif de calage de roues, s'étend également à l'horizontale mais est orienté vers le milieu longitudinal de la plate-forme de chargement (1) du véhicule de transport de voitures,
1.3. le rail de calage (7) de roues, à côté d'un couloir d'entretien (18) situé à proximité de l'un des côtés longitudinaux de la plate-forme de chargement (1) du véhicule de transport de voitures, étant associé à cette plate-forme de chargement,
caractérisé en ce que
1.4. l'étançon d'appui (13) et l'étançon de support (12) sont rigides à la flexion,
1.5. l'angle de liaison entre l'étançon de support (12) et l'étanyon d'appui (13) est rigide,
1.6. par rapport à l'angle de 90°, l'étançon de support (12) et l'étançon d'appui (13) sont uniquement reliés entre eux au niveau du sommet de l'angle, et
1.7. en ce que l'association du dispositif de calage de roues, comportant l'étançon d'appui (13) et l'étançon de support (12), avec le rail de calage (7) de roues est effectuée, d'une part au niveau de l'extremité de l'étançon d'appui (13) dans une articulation (14, 15) à axe de pivotement vertical qui, par rapport au milieu longitudinal (2) de la plate-forme de chargement (1), est située de l'autre côté de l'étançon de support (12), et d'autre part au niveau de l'extrémité de l'étançon de support (12) opposée à l'étançon d'appui, dans un dispositif à levier (20) que peut être pivoté autour d'un axe horizontal (21) par rapport à l'étançon de support (12) afin que dans l'une de ses positions d'extrémité, il soit associé au rail de calage (7) de roues en étant maintenu entre deux mâchoires de serrage (22, 23) élastiques, et que dans son autre position d'extrémité, il soit suffisamment soulevé pour qu'il puisse être déplacé avec l'étançon de support (12) et l'étançon d'appui (13) autour de l'axe de pivotement vertical précité au dessus du rail de calage (7) de roues.

2. Dispositif de calage de roues selon la revendication 1, caractérisé en ce que, au niveau de l'extrémité libre de l'étançon d'appui (13), il est prévu une butée d'extrémité (8 ; 17) qui limite les mouvements transversaux d'une roue de voiture (11) prenant appui sur le dispositif de calage de roues.

3. Dispositif de calage de roues selon la revendication 2, caractérisé en ce que la butée est une butée d'extrémité (17) qui est directement reliée de façon solidaire à l'extrémité libre de l'étançon d'appui (13).

4. Dispositif de calage de roues selon la revendication 2, caractérisé en ce que la butée est une partie d'un rail de butée (8), qui s'étend entra l'extrémité libre de l'étançon d'appui (13) et l'axe du milieu longitudinal (2) de la plate-forme de chargement (1) du véhicule de transport de voitures sur toute la longueur du rail de calage (7) de roues, parallèlement au rail de calage (7) de roues et a l'axe du milieu longitudinal (2) précité, et qui est associé à demeure à la plate-forme de chargement (1).

5. Dispositif de calage de roues selon l'une quelconque des revendications 1 à 4, caractérisé en ce que l'unité constituée de l'étançon de support (12) et de l'étançon d'appui (13) est associée à une pièce d'étrier (16) en pouvant pivoter autour d'un axe vertical (15), laquelle est de son côté associée au rail de calage (7) de roues en étant mobile dans le sens longitudinal et en pouvant être bloquée, l'unité pouvant être bloquée dans deux différentes positions d'extrémité, dans l'une de ces positions l'étançon d'appui (13) s'étendant en direction transversale, et dans l'autre l'étançon d'appui (13) s'étendant en direction longitudinale de la plate-forme de chargement (1) rectangulaire du véhicule de transport de voitures.

6. Dispositif de calage de roues selon la revendication 5, caractérisé en ce que la longueur de l'étançon de support (12) entre l'axe de pivotement (15) et l'extrémité libre correspond sensiblement à la largeur du couloir d'entretien (18), mais ne dépasse pas la largeur du couloir d'entretien.
